# EUROPEAN PATENT SPECIFICATION

(11) **EP 3 259 901 B1**
(45) Date of publication and mention of the grant of the patent: **16.09.2020**
(21) Application number: 16705504.5
(22) Date of filing: 18.02.2016
(51) Int. Cl.: H04N 1/60

(54) **METHOD FOR COLOUR MATCHING PRINTERS**
VERFAHREN ZUR FARBANGLEICHUNG VON DRUCKERN
PROCÉDÉ D'ADAPTATION DE COULEUR D'IMPRIMANTES

(30) Priority: 19.02.2015 EP 15155696
(43) Date of publication of application: 27.12.2017
(73) Proprietor: Canon Production Printing Netherlands B.V., 5914 CA Venlo (NL)
(72) Inventor: VAN DER LINDEN, Erwin A.R., 5914 CA Venlo (NL); GOLDSCHMIDT, Arjen D., 5914 CA Venlo (NL)
(74) Representative: Canon Production Printing IP Department
(86) International application number: PCT/EP2016/053487
(87) International publication number: WO 2016/131933

(56) References cited:
- EP-A2- 1 185 080
- EP-A2- 1 294 178
- EP-A2- 1 903 774
- US-B1- 7 221 465

## Description

### BACKGROND OF THE INVENTION

### 1. Field of the invention

The present invention relates to a method for printing colour images using a colour workflow that results in comparable colours from different print systems. In particular, the invention relates to a workflow for obtaining colours from an additional print system that are similar to colours obtained from an existing print system. Furthermore, the invention relates to a print system that is configured for applying the method to obtain similar colours as obtained from an existing print system.

### 2. Description of the Related Art

The need to control colours in a colour image rendering apparatus, such as a monitor or a printer, as well as in a colour image generating device, such as a camera and a scanner, has resulted in various colour management systems. The most familiar system is the one supported by the International Colour Consortium (ICC), although other systems exist that give comparable results. Colours in a digital image are generally specified in device dependent coordinates. Familiar coordinate spaces are RGB- and CMYK-spaces, but other spaces, depending on a configuration of a device wherein the digital image is processed, may be applicable. A colour, associated with a point in a coordinate space, may be determined in physical units by a measuring instrument. Thus, a colour is positioned in a device independent colour space, such as CIE XYZ and CIE Lab. A conversion between the device dependent coordinate space and the device independent colour space is saved as a colour profile, that is applicable for processing images of a specific device.

Traditionally, colour profiles are associated with a situation wherein a digital image is transferred from a first device, an input device, to a second device, an output device, such as from a scanner to a printer. In such a case, two colour profiles are engaged, one for each device. First, the input device coordinates are converted to a device independent colour and second, the device independent colour is converted to output device coordinates. The combination of two colour profiles in this way is a basic colour workflow as envisaged by the ICC. The device independent colour space acts as a profile connecting space (PCS). The combination of the profiles is not necessarily done during processing of an image, but may also be done in a separate process, thereby obtaining a conversion means that is specifically suitable for transferring images between the two specific devices. This conversion means is known as a device link profile.

In printing workflows, there is no input device as such, but still an input colour profile is applied to convert the colours as specified in a digital input image and a similar colour workflow as above arises. Most often, an input colour profile relates to standard print conditions, such as SWOP, GRACoL2000 and FOGRA39, but also standard RGB (sRGB) is used. Also in these workflows, device link profiles are known for converting colours in digital images directly into colours suitable for printing. It is noted, that using a PCS is just one way of composing these device link profiles, but other ways, using a colour model for the input and output colour spaces, are very well feasible.

A colour profile for an input device is made from measurements wherein predetermined colours are introduced to an input device and a corresponding device response is determined. From these measurements a table for converting a device response to a colour is determined. Intermediate points from the tabulated values are converted by interpolation. A colour profile relating to standard printing conditions has a similar structure. Both colour profiles may be used as input colour profiles for converting specific coordinates to a PCS. For this conversion, a table referred to as AtoB, or A2B, is used, indicating the direction of the conversion, wherein A refers to a specific colour coordinate space, whereas B refers to the PCS. A colour profile usually also comprises an inverse table, known as BtoA, or B2A, for a conversion in the opposite direction. A colour profile for an output device, on the other hand, may be made from measurements wherein a device stimulation is introduced to an output device for obtaining coloured areas that may be measured by a measuring instrument. In this case, a conversion table called BtoA, or B2A, is aimed at, in order to convert a colour to device stimulation coordinates. Also included in the profile is an inverse table AtoB, or A2B, that is convenient in some colour workflows. Thus, the colour profiles facilitate conversion of colours from a PCS to a device space and vice versa.

In addition to the mentioned profiles, there are also abstract profiles that convert a colour in a PCS to another colour, in the same PCS. These abstract profiles are convenient in constructing a colour workflow, wherein colours are adjusted in a predefined way, such as for adding contrast in an image. In fact, a colour workflow may concatenate several colour profiles for obtaining a new colour profile, the type of which depends on the type of the colour profiles in the set.

A further issue exists in the selection of an appropriate rendering intent, which defines a way to interpret the colour data of a profile. A number of predetermined rendering intents exist, called absolute, relative, perceptual and saturation rendering intent. The interpretation of these rendering intents is well known and it may be necessary to make an appropriate selection therefor. Furthermore, it is known that a colour profile depends on a medium that is used in the printing process. In a convenient working method, a colour workflow is associated with a print medium, or a set of media.

An often used colour workflow is the colour proofing workflow, or simulation colour workflow. This comes in useful, when an image is printed on a proofing device, having a larger gamut than a production device. Without proofing workflow, this may lead to different colours in the output of the proofing device than would be obtained by printing the image on the production device, depending on the colours used in the image. Thus, it may lead to an inaccurate proofing. Many software applications therefore allow the definition of a simulation profile, which is an output colour profile of the device to be simulated and concatenate an input colour profile (A2B), the B2A-table of the simulation profile, the A2B-table of the simulation profile and the output profile (B2A) of the proofing device. This results in similar colours in the output of the proofing device as the output of the production device, if the simulation profile is accurate, meaning that the production device prints colours according to its output colour profile.

In practice, however, a situation may be encountered, wherein a new print system is added to an existing print system, which employs an acknowledged colour output profile, or, alternatively, a device link profile. The new print system is to be configured to obtain accurately the same colours as the existing print system, without any change to the established workflow for the existing print system. If the colour output profile of the existing print system were accurate, the situation would be the same as for the proofing colour workflow. The accuracy may be determined by obtaining colour measurement data that relate device colorant coordinates of the existing print system to device independent colour data. If the determined accuracy is insufficient, no colour workflow is known, which poses a problem for appending an additional print system to an existing set of print systems.

In line with the above, US 7,221,465 B1 discloses a known solution for replacing a failed printer by a substitute printer, and EP 1 294 178 A2 discloses a known colour proofing workflow.

An object of the present invention is to provide a colour workflow that allows to expand an existing set of print systems with additional ones, whether or not of similar type and obtaining similar colour output.

### SUMMARY OF THE INVENTION

According to the present invention, a method for printing colour images is provided, using a colour workflow that results in comparable colours from an existing print system and an additional print system, the existing print system applying an existing colour output profile for converting colours of an input image, the additional print system applying the colour workflow for converting colours of an input image, the method being defined in detail in claim 1.

This colour workflow has the following effect. First a colour to be printed on the additional print system is converted into coordinates suitable for the existing print system by the existing output colour profile, in the same way as would have been done for the existing print system. The actual colour profile, corresponding to measurement data taken from the existing print system, reflects the relation between the coordinates of the existing print system and the profile connecting space (PCS) that is applicable. By applying the actual colour profile in the inverse direction, the existing print system coordinates are converted to a colour in the PCS. This colour is then converted to coordinates in the additional print system, thus enabling this print system to reproduce the colour as intended to be printed by the existing print system.

Note that for the application of this colour workflow, three output profiles need to be specified, in contrast with a usual simulation workflow that only requires two output profiles. In an embodiment, a combination output profile is made by combining the usual B2A-table, also known as output table, of the existing output colour profile with the inverse table, this is the A2B-table, also known as the input table, of the actual output colour profile. This extraordinary colour profile, which is extraordinary because the A2Band B2A-table are not each others inverse, as is usually the case, may be used to define a colour workflow in a user interface that only allows an input of a single simulation profile. The simulation workflow has in that case the same result as the invented workflow.

Further details of the invention are given in the dependent claims. The present invention may also be embodied in a print system for printing colour images. A print system should be understood to broadly cover any machine that has a printing function, including multifunctional machines that have a scanning, printing and copying function.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
- Figure 1: shows a number of known colour workflows for printing data;
- Figure 2: shows a colour workflow according to the invented method;
- Figure 3: is a user interface for defining a colour workflow, and
- Figure 4: shows the individual steps for obtaining an invented colour workflow.

### DETAILED DESCRIPTION OF EMBODIMENTS

The present invention will now be described with reference to the accompanying drawings, wherein the same or similar elements are identified with the same reference numeral.

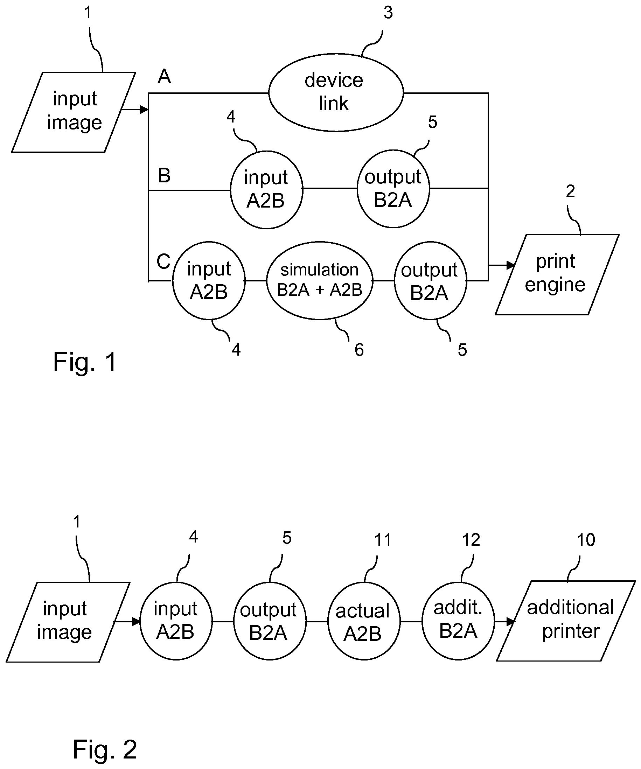

In Figure 1, an input image 1 comprising colour information is scheduled to be printed on print engine 2. An image in the present context means anything that can be displayed, including text and graphics. Three possible, known workflows are available for converting the colour information into printer coordinates. A selection of a workflow may be made automatically in the digital front end, where the input data are rendered, but, alternatively, a user may define a preferred workflow, if it is compatible with the input data. The input data may comprise an input colour profile for converting the input image data into a Profile Connecting Space (PCS), such as the CIE-Lab colour space. Often, the input data refer to standard printing conditions, such as SWOP or FOGRA39 or a standard colour space, such as sRGB. In case no input profile is included in the input data, an input colour profile is either available in the digital front end or may be found on the internet. Workflow A refers to a case wherein the colour input data is directly converted by a device link profile 3, without using a PCS. Workflow B is the standard ICC workflow that comprises an input colour profile 4 and an output colour profile 5 that both may comprise a relation between a specific device or a standard colour device and a PCS. The A2B-table of the input profile is joined with the B2A-table of the output profile to obtain a colour conversion that is compatible with the colour specifications of the print engine 2. Workflow C is a simulation colour workflow that is used to convert the colours of the input image in such a way that the colours in the output of the print engine 2 do not extend beyond a gamut of a simulated device. In this simulated device, the simulation profile 6 is used as an output profile. It is assumed in this workflow that the simulated device accurately, i.e. according to colour measurements, renders the colours of the simulation profile. In the simulation workflow C, the simulation profile is applied twice, once to convert a PCS colour to the simulated device coordinates, and a second time to convert the simulated device coordinates back to the PCS. In practice, the accuracy assumption does not always hold. Print systems apply colour profiles that are colorimetrically not accurate, but it is still required to match an additional printer to an existing print system, while maintaining the inaccurate profile. Figure 2 shows a workflow that may be used in such a case. The print engine 2 of Figure 1 is considered to be part of an existing print system for which the workflows and profiles of Figure 1 are maintained. An input image 1 is printed on an additional printer 10. First, the input data are converted by the input and output profiles 4 and 5 in the same way as in workflow B in Figure 1. If a device link profile is available, it is also possible to replace the profiles 4 and 5 by the device link profile, as in workflow A in Figure 1. An actual profile 11, that accurately describes the colour behaviour of the existing print engine 2, is inserted to convert a colour as defined in print engine 2 coordinates to the PCS. This actual profile is a new profile obtained from colour measurements on print engine 2. It is therefore an output colour profile that is applied in the inverse direction. Once a colour is in the PCS, it may be converted to coordinates of an additional printer by an additional output profile 12, that is obtained from colour measurements on the additional printer 10 in the usual way. Thus, the output colours of additional printer 10 are similar to the colours of print engine 2.

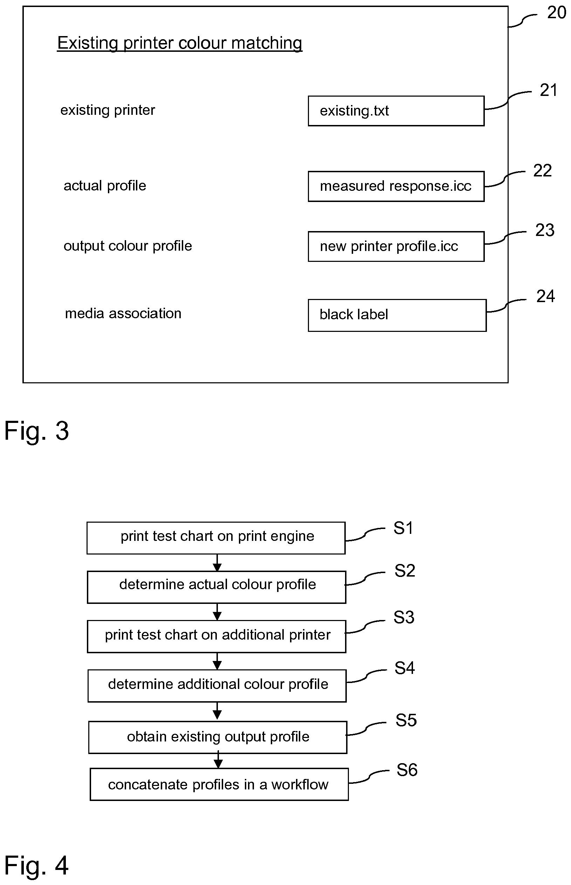

Figure 3 shows a user interface 20 for defining the colour matching workflow. For an existing printer, the existing printer parameter set 21 is selected. This set comprises the complete definition of parameters that are used in the colour workflow of the existing printer, such as an input and output colour profile (or a device link profile), the applied rendering intent, the black point compensation method, the pure colour preservation, etc. Thus, in the colour matching workflow, an exact copy of the colour workflow for the existing engine can be applied. Also, an actual profile 22, reflecting an actual relation between the existing printer coordinates and the PCS, is inserted and a colour output profile 23 as determined from measurements on the additional printer 10. The rendering intent for using the actual profile 22 and colour output profile 23 is preferably the absolute rendering intent, or, alternatively, the relative rendering intent without black point compensation, in order to convert the colours as directly as possible. However, in this embodiment, this parameter is not selectable, but fixed, but alternatively it is selectable. Furthermore, in box 24, this colour workflow may be associated with a medium from the medium list of additional printer 10, such that this workflow is automatically selected when a user selects this medium to print the input image.

Figure 4 shows the individual steps that are taken to obtain the required profile data to apply the colour workflow as shown in Figure 2. In step S1, a test chart is printed on an existing print engine, such as print engine 2 in Figure 1. An actual colour profile 11 is determined in step S2. In step S3, a similar test chart is printed on the new, additional printer 10 in Figure 2, for which an output colour profile 12 is determined in step S4. Subsequently, in step S5, the existing output profile 5 as used for the existing print engine 2 is obtained. Then, in step S6, these profiles are concatenated as indicated in Figure 2. It is noted, that several commercial software programs, such as X-rite i1 Profiler, exist for making the necessary calculations, both for making colour profiles from test chart measurements and for concatenating various profiles. Also, Colour Management Modules (CMM) by Adobe and Microsoft, are capable of assembling various colour profiles in a colour workflow. In the present embodiment, non-commercial, proprietary software has been used to make the various interpolations and interpretations that are necessary to obtain the profiles, but this is well known in the art of colour management.

The invention being thus described, it will be obvious that the same may be varied in many ways. Such variations are not to be regarded as a departure from the scope of the invention, which is defined by the following claims.

## Claims

1. A method for printing colour images using a colour workflow that results in equal colours from an existing print system and an additional print system, the existing print system applying an existing colour output profile for converting colours of an input image, the additional print system applying the colour workflow for converting colours of an input image, the method comprising the steps of:
a) obtaining an additional output colour profile for the additional print system from colour measurement data that relate device colorant coordinates of the additional print system to device independent colour data;
b) obtaining an actual output colour profile for the existing print system from colour measurement data that relate device colorant coordinates of the existing print system to device independent colour data;
c) obtaining the existing output colour profile;
d) combining the existing output colour profile, the actual output colour profile and the additional colour output profile in the colour workflow, and
e) converting the colours of an input image according to the colour workflow and printing the converted image using the additional print system,
wherein the existing output colour profile, in contrast to the actual output colour profile, does not accurately describe the colour behaviour of the existing print system as is apparent from the colour measurement data in step b) and the actual output colour profile is applied in an inverse direction (A2B) in the step of combining output colour profiles.

2. The method according to claim 1, wherein the colour workflow is stored as a colour output profile for the additional print system.

3. The method according to claim 1, wherein the actual output colour profile and the additional output colour profile are combined in a device link profile.

4. The method according to claim 1, wherein the colour workflow is combined with a colour input profile to a device link profile for the additional print system.

5. The method according to claim 4, wherein a number of colour profiles of the colour workflow are combined in a device link profile.

6. The method according to claim 1, wherein the colour workflow is associated with a medium that is applicable in the additional print system, such that the colour workflow is applied when the medium is selected as output medium for an input image to be printed.

7. The method according to claim 1, wherein an output table of the existing output colour profile and an input table of the actual output colour profile are stored as an extraordinary colour profile, wherein the two tables are not each others inverse.

8. A print system for printing colour images using a colour workflow for converting colours of an input image resulting in equal colours as obtained from an existing print system, the existing print system applying an existing colour output profile for converting colours of an input image, the print system being configured to combine the existing output colour profile, an actual output colour profile, that relates device colorant coordinates of the existing print system to device independent colour data, and an additional output colour profile, that relates device colorant coordinates of the print system to device independent colour data, in the colour workflow, wherein the existing output colour profile, in contrast to the actual output colour profile, does not accurately describe the colour behaviour of the existing print system and the actual output colour profile is applied in an inverse direction (A2B).

9. The print system according to claim 8, wherein a user interface is configured to enable a selection of an existing colour output profile, an actual output colour profile and an additional output colour profile that are combined in the colour workflow.

10. The print system according to claim 8, wherein the colour workflow is associated with a medium that is applicable in the print system, such that the colour workflow is applied when the medium is selected as output medium for an input image to be printed.

## Patentansprüche

1. Verfahren zum Drucken von Farbbildern unter Verwendung eines Farbworkflows, der zu gleichen Farben von einem bestehenden Drucksystem und einem zusätzlichen Drucksystem führt, wobei das bestehende Drucksystem zum Konvertieren von Farben eines Eingabebildes ein bestehendes Farbausgabeprofil anwendet und das zusätzliche Drucksystem zum Konvertieren von Farben aus einem Eingabebild den Farbworkflow anwendet, welches Verfahren die folgenden Schritte umfasst:
a) ableiten eines zusätzlichen Farbausgabeprofils für das zusätzliche Drucksystem aus Farbmessdaten, die Geräte-Farbkoordinaten des zusätzlichen Drucksystems zu geräteunabhängigen Farbdaten in Beziehung setzen;
b) ableiten eines aktuellen Farbausgabeprofils für das bestehende Drucksystem aus Farbmessdaten, die Geräte-Farbkoordinaten des bestehenden Drucksystems zu geräteunabhängigen Farbdaten in Beziehung setzen;
c) bereitstellenden des bestehenden Farbausgabeprofils;
d) kombinieren des bestehenden Farbausgabeprofils, des aktuellen Farbausgabeprofils und des zusätzlichen Farbausgabeprofils in dem Farbworkflow, und
e) konvertieren der Farben eines Eingabebildes gemäß dem Farbworkflow und
Drucken des konvertierten Bildes unter Verwendung des zusätzlichen Drucksystems, wobei das bestehende Farbausgabeprofil im Gegensatz zu dem aktuellen Farbausgabeprofil das Farbverhalten des bestehenden Drucksystems, wie es sich aus den Farbmessdaten in Schritt b) ergibt, nicht akkurat beschreibt und das aktuelle Farbausgabeprofil in dem Schritt des Kombinierens der Farbausgabeprofile in umgekehrter Richtung (A2B) angewandt wird.

2. Verfahren nach Anspruch 1, bei dem der Farbworkflow als ein Farbausgabeprofil für das zusätzliche Drucksystem gespeichert wird.

3. Verfahren nach Anspruch 1, bei dem das aktuelle Farbausgabeprofil und das zusätzliche Farbausgabeprofil in einem Geräte-Verknüpfungsprofil kombiniert werden.

4. Verfahren nach Anspruch 1, bei dem der Farbworkflow mit einem Farbeingabeprofil zu einem Geräte-Verknüpfungsprofil für das zusätzliche Drucksystem kombiniert wird.

5. Verfahren nach Anspruch 4, bei dem eine Anzahl von Farbprofilen des Farbworkflows in einem Geräte-Verknüpfungsprofil kombiniert werden.

6. Verfahren nach Anspruch 1, bei dem der Farbworkflow einem Medium zugeordnet wird, das in dem zusätzlichen Drucksystem anwendbar ist, derart, dass der Farbworkflow angewandt wird, wenn das Medium als Ausgabemedium für ein zu druckendes Eingabebild ausgewählt wird.

7. Verfahren nach Anspruch 1, bei dem eine Ausgabetabelle des bestehenden Farbausgabeprofils und eine Eingabetabelle des aktuellen Farbausgabeprofils als ein außerordentliches Farbprofil gespeichert werden, wobei die beiden Tabellen nicht zueinander invers sind.

8. Drucksystem zum Drucken von Farbbildern unter Verwendung eines Farbworkflows zum Konvertieren von Farben eines Eingabebildes, der zu gleichen Farben führt, wie sie von einem bestehenden Drucksystem erhalten werden, wobei das bestehende Drucksystem zum Konvertieren von Farben eines Eingabebildes ein bestehendes Farbausgabeprofil anwendet, wobei das Drucksystem dazu konfiguriert ist, das bestehende Farbausgabeprofil, ein aktuelles Farbausgabeprofil, das Geräte-Farbkoordinaten des bestehenden Drucksystems zu geräteunabhängigen Farbdaten in Beziehung setzt, und ein zusätzliches Farbausgabeprofil, das Geräte-Farbkoordinaten des Drucksystems mit geräteunabhängigen Farbdaten in Beziehung setzt, in dem Farbworkflow miteinander kombiniert, wobei das bestehende Farbausgabeprofil im Gegensatz zu dem aktuellen Farbausgabeprofil das Farbverhalten des bestehenden Drucksystems nicht akkurat beschreibt, und das aktuelle Farbausgabeprofil in einer umgekehrten Richtung (A2B) angewandt wird.

9. Drucksystem nach Anspruch 8, bei dem eine Benutzerschnittstelle dazu konfiguriert ist, eine Auswahl eines bestehenden Farbausgabeprofils, eines aktuellen Farbausgabeprofils und eines zusätzlichen Farbausgabeprofils zu ermöglichen, die in dem Farbworkflow kombiniert werden.

10. Drucksystem nach Anspruch 8, bei dem der Farbworkflow einem Medium zugeordnet ist, das in dem Drucksystem anwendbar ist, derart, dass der Farbworkflow angewandt wird, wenn das Medium als Ausgabemedium für ein zu druckendes Eingabebild ausgewählt wird.

## Revendications

1. Procédé d'impression d'images en couleurs en utilisant un flux de travail de couleurs qui entraîne des couleurs égales à partir d'un système d'impression existant et d'un système d'impression additionnel, le système d'impression existant appliquant un profil de sortie de couleurs existant pour convertir des couleurs d'une image d'entrée, le système d'impression additionnel appliquant le flux de travail de couleurs pour convertir des couleurs d'une image d'entrée, le procédé comprenant les étapes suivantes :
a) l'obtention d'un profil de couleurs de sortie additionnel pour le système d'impression additionnel à partir de données de mesure de couleurs qui relient des coordonnées de colorant de dispositif du système d'impression additionnel à des données de couleurs indépendantes du dispositif ;
b) l'obtention d'un profil de couleurs de sortie effectif pour le système d'impression existant à partir de données de mesure de couleurs qui relient des coordonnées de colorant de dispositif du système d'impression existant à des données de couleurs indépendantes du dispositif ;
c) l'obtention du profil de couleurs de sortie existant ;
d) la combinaison du profil de couleurs de sortie existant, du profil de couleurs de sortie effectif et du profil de sortie de couleurs additionnel dans le flux de travail, et
e) la conversion des couleurs d'une image d'entrée en fonction du flux de travail de couleurs et l'impression de l'image convertie en utilisant le système d'impression additionnel,
dans lequel le profil de couleurs de sortie existant, contrairement au profil de couleurs de sortie effectif, ne décrit pas de manière précise le comportement de couleurs du système d'impression existant comme il ressort des données de mesure de couleurs dans l'étape b) et le profil de couleurs de sortie effectif est appliqué dans une direction inverse (A2B) dans l'étape de combinaison de profils de couleurs de sortie.

2. Procédé selon la revendication 1, dans lequel le flux de travail de couleurs est stocké comme un profil de sortie de couleurs pour le système d'impression additionnel.

3. Procédé selon la revendication 1, dans lequel le profil de couleurs de sortie effectif et le profil de couleurs de sortie additionnel sont combinés dans un profil de liaison de dispositif.

4. Procédé selon la revendication 1, dans lequel le flux de travail de couleurs est combiné avec un profil d'entrée de couleurs à un profil de liaison de dispositif pour le système d'impression additionnel.

5. Procédé selon la revendication 4, dans lequel un nombre de profils de couleurs du flux de travail de couleurs sont combinés dans un profil de liaison de dispositif.

6. Procédé selon la revendication 1, dans lequel le flux de travail de couleurs est associé à un support qui est applicable dans le système d'impression additionnel, de manière que le flux de travail de couleurs soit appliqué quand le support est sélectionné comme support de sortie pour une image d'entrée à imprimer.

7. Procédé selon la revendication 1, dans lequel une table de sortie du profil de couleurs de sortie existant et une table d'entrée du profil de couleurs de sortie effectif sont stockées comme un profil de couleurs extraordinaire, dans lequel les deux tables ne sont pas inverses l'une de l'autre.

8. Système d'impression pour imprimer des images en couleurs en utilisant un flux de travail de couleurs pour convertir des couleurs d'une image d'entrée en entraînant des couleurs égales telles qu'obtenues à partir d'un système d'impression existant, le système d'impression existant appliquant un profil de sortie de couleurs existant pour convertir des couleurs d'une image d'entrée, le système d'impression étant configuré pour combiner le profil de couleurs de sortie existant, un profil de couleurs de sortie effectif, qui relie des coordonnées de colorant de dispositif du système d'impression existant à des données de couleurs indépendantes du dispositif, et un profil de couleurs de sortie additionnel, qui relie des coordonnées de colorant de dispositif du système d'impression à des données de couleurs indépendantes du dispositif, dans le flux de travail de couleurs, dans lequel le profil de couleurs de sortie existant, contrairement au profil de couleurs de sortie effectif, ne décrit pas de manière précise le comportement de couleurs du système d'impression existant et le profil de couleurs de sortie effectif est appliqué dans une direction inverse (A2B).

9. Système d'impression selon la revendication 8, dans lequel une interface utilisateur est configurée pour permettre une sélection d'un profil de sortie de couleurs existant, d'un profil de couleurs de sortie effectif et d'un profil de couleurs de sortie additionnel qui sont combinés dans le flux de travail de couleurs.

10. Système d'impression selon la revendication 8, dans lequel le flux de travail de couleurs est associé à un support qui est applicable dans le système d'impression, de manière que le flux de travail de couleurs soit appliqué quand le support est sélectionné comme support de sortie pour une image d'entrée à imprimer.
